# EUROPÄISCHE PATENTSCHRIFT

(11) **EP 2 709 885 B1**
(45) Veröffentlichungstag und Bekanntmachung des Hinweises auf die Patenterteilung: **01.04.2015**
(21) Anmeldenummer: 12718919.9
(22) Anmeldetag: 30.04.2012
(51) Int. Cl.: B60W 10/06, B60W 10/08, B60W 20/00, B60W 10/26, F02D 45/00, H02J 7/14, B60L 11/02, B60K 6/20

(54) **VERFAHREN UND VORRICHTUNG ZUM LADEN EINER BATTERIE FÜR EIN FAHRZEUG**
METHOD AND APPARATUS FOR CHARGING A BATTERY FOR A VEHICLE
PROCÉDÉ ET DISPOSITIF DE CHARGE D'UNE BATTERIE POUR UN VÉHICULE

(30) Priorität: 14.05.2011 DE 102011101550
(43) Veröffentlichungstag der Anmeldung: 26.03.2014
(73) Patentinhaber: Volkswagen Aktiengesellschaft, 38440 Wolfsburg (DE)
(72) Erfinder: THIAMTONG, Vasoontara, 38442 Wolfsburg (DE); KRAFZIG, Benjamin, 38165 Lehre (DE)
(86) Internationale Anmeldenummer: PCT/EP2012/001864
(87) Internationale Veröffentlichungsnummer: WO 2012/156027

(56) Entgegenhaltungen:
- DE-A1- 4 133 013
- DE-A1-102007 024 471
- DE-A1-102008 050 737
- JP-B2- 3 013 694
- US-A1- 2004 006 414
- US-A1- 2008 084 186

## Beschreibung

Die vorliegende Erfindung betrifft ein Verfahren, um eine Batterie eines Fahrzeugs, insbesondere eines Fahrzeugs mit Elektromotor, über einen Verbrennungsmotor des Fahrzeugs zu laden sowie eine entsprechend ausgestaltete Vorrichtung und ein entsprechend ausgestaltetes Fahrzeug.

Aus der DE 10 2010 016 188 A1 ist bekannt, eine Stromerzeugungseinrichtung (in der Regel einen Verbrennungsmotor) zu aktivieren, wenn der Ladezustand eines elektrischen Energiespeichers einer unteren Betriebsgrenze entspricht.

Die US 2004/0006314 A zeigt ein Verfahren zum Laden einer Batterie eines Fahrzeugs. Der Soll-Ladezustand, insbesondere dessen unterer Schwellwert, wird angepasst. Die DE 10 2007 024 471 nennt eine Anpassung des Ladezustands einer derartigen Batterie auf Basis des Fahrertyps und des zu erwartenden Straßenverlaufs.

Bei einem Fahrzeug, welches eine Batterie sowie einen Elektromotor und einen Verbrennungsmotor zum Antrieb des Fahrzeugs umfasst, ist es üblich, den Verbrennungsmotor zum Laden der Batterie zu starten, sobald der Ladezustand (SOC ("State of Charge")) der Batterie unterhalb eines unteren Schwellenwerts (z.B. 35% des maximalen Ladezustands) liegt. In der Regel läuft der Verbrennungsmotor dann zumindest solange, bis der Ladezustand der Batterie über einem oberen Schwellenwert (z. B. 38 % des maximalen Ladezustands) liegt. In bestimmten Fahrphasen oder Fahrzuständen (beispielsweise Standphasen oder Phasen mit geringer Geschwindigkeit) des Fahrzeugs wird der Verbrennungsmotor in der Regel abgeschaltet, um Kraftstoff zu sparen. Durch Nebenverbraucher (beispielsweise Klimaanlage, Radio) und gegebenenfalls durch den Elektromotor wird dabei weiterhin Strom aus der Batterie verbraucht. Dadurch ergibt sich ein häufiges Wechseln zwischen Phasen, in denen der Verbrennungsmotor ausgeschaltet ist, und Phasen, in denen der Verbrennungsmotor zum Laden der Batterie eingeschaltet ist, was von den meisten Fahrern als nachteilig angesehen wird.

Daher stellt sich die vorliegende Erfindung die Aufgabe, die Häufigkeit, mit weicher zwischen Phasen, in denen der Verbrennungsmotor ausgeschaltet ist, und Phasen, in denen der Verbrennungsmotor zum Laden der Batterie eingeschaltet ist, im Vergleich zum Stand der Technik zu reduzieren.

Erfindungsgemäß wird diese Aufgabe durch ein Verfahren zum Laden einer Batterie für ein Fahrzeug nach Anspruch 1, durch eine Vorrichtung zum Laden einer Batterie für ein Fahrzeug nach Anspruch 13 und durch ein Fahrzeug nach Anspruch 15 gelöst. Die abhängigen Ansprüche definieren bevorzugte und vorteilhafte Ausführungsformen der vorliegenden Erfindung.

Im Rahmen der vorliegenden Erfindung wird ein Verfahren zum Laden einer Batterie (in der Regel einer Hochvolt-Batterie (Spannung 100 bis 800 V)) für ein Fahrzeug bereitgestellt. Dabei umfasst das Fahrzeug neben der Batterie einen Verbrennungsmotor zum Laden der Batterie (und gegebenenfalls auch zum Antrieb des Fahrzeugs) und meist auch einen Elektromotor zum Antrieb des Fahrzeugs. Ein Ladezustand der Batterie wird bestimmt und der Verbrennungsmotor wird zum Laden der Batterie gestartet, wenn der Ladezustand unterhalb eines unteren Schwellenwerts liegt. Es wird eine Häufigkeit pro Zeitintervall bestimmt, welche angibt, wie häufig in diesem Zeitinterval der Ladezustand (von oberhalb des unteren Schwellenwerts) unter den unteren Schwellenwert fällt. Das Laden der Batterie mit Hilfe des Verbrennungsmotors wird in Abhängigkeit von dieser Häufigkeit durchgeführt.

Es sei darauf hingewiesen, dass unter dem Begriff Batterie jegliche Form eines elektrischen Energiespeichers, welcher in der Lage ist, elektrische Ladung aufzunehmen, zu speichern und wieder abzugeben, verstanden wird. Damit umfasst der Begriff Batterie beispielsweise auch einen elektrischen Kondensator.

Indem das Laden der Batterie abhängig von der Häufigkeit, mit welcher der Ladezustand der Batterie pro Zeiteinheit unter den unteren Schwellenwert fällt, durchgeführt wird, kann dieses Laden der Batterie beispielsweise auch derart erfolgen, dass diese Häufigkeit reduziert wird. Indem diese Häufigkeit reduziert wird, wird vorteilhafterweise auch diejenige Häufigkeit reduziert, mit welcher sich Phasen, in denen der Verbrennungsmotor ausgeschaltet ist, mit Phasen, in denen der Verbrennungsmotor die Batterie lädt, pro Zeiteinheit abwechseln.

Beispielsweise kann das Laden der Batterie über den Verbrennungsmotor derart durchgeführt werden, dass diese Häufigkeit sinkt, wenn die Häufigkeit, mit welcher der Ladezustand der Batterie pro Zeiteinheit unter den unteren Schwellenwert fällt, über einem vorbestimmten Häufigkeitsschwellenwert liegt.

Dabei kann diese Häufigkeit auf den Wert Null zurückgesetzt werden, wenn zu einem bestimmten Zeitpunkt ein bestimmter Fahrzustand des Fahrzeugs erfasst wird, wobei die Häufigkeit ab diesem Zeitpunkt dann neu bestimmt wird.

Dieser bestimmte Fahrzustand des Fahrzeugs kann zum Beispiel vorliegen, wenn zumindest einer der folgenden Zustände vorliegt:
- Das Fahrzeug fährt eine vorbestimmte Zeitdauer lang mit einer Geschwindigkeit, welche oberhalb eines vorbestimmten Geschwindigkeitsschwellenwerts liegt.
- Der Ladezustand der Batterie liegt über einem vorbestimmten Ladeschwellenwert, welcher über einem oberen Ladeschwellenwert liegt, an welchem eine Freigabe zum Stoppen des Ladens der Batterie durch den Verbrennungsmotor erteilt wird.
- Ein Zündungswechsel tritt auf. Dabei wird unter einem Zündungswechsel das Ereignis verstanden, dass die Zündung des Fahrzeugs entweder ausgeschaltet oder eingeschaltet wird.

In bestimmten Situationen ist es vorteilhaft, die Häufigkeit neu zu bestimmen und damit ältere Informationen nicht mehr zur Bestimmung der Häufigkeit heranzuziehen. Dies ist insbesondere dann der Fall, wenn ein neuer Fahrzyklus beginnt, was beispielsweise durch den Zündungswechsel erkannt wird, oder wenn der Ladezustand der Batterie deutlich oberhalb des unteren Schwellenwerts liegt, so dass in der nächsten Zeit nicht mehr damit gerechnet werden muss, dass der Ladezustand unter den unteren Schwellenwert fällt.

Gemäß einer erfindungsgemäßen Ausführungsform wird der untere Schwellenwert um einen bestimmten Betrag (Offset), welcher im Folgenden zur Abgrenzung gegenüber anderen Beträgen Unterschwellenbetrag genannt wird, geändert, wobei dieser Unterschwellenbetrag abhängig von der erfassten Häufigkeit gewählt werden kann.

Beispielsweise kann der untere Schwellenwert um den Unterschwellenbetrag angehoben werden, wobei der Unterschwellenbetrag umso größer ist, umso größer die Häufigkeit ist. Dadurch wird vorteilhafterweise der mittlere Ladezustand der Batterie pro Zeiteinheit angehoben, so dass beispielsweise mehr elektrische Energie für einen elektrischen Antrieb des Fahrzeugs zur Verfügung steht. Das Anheben des unteren Schwellenwerts stellt auch einen vorteilhaften psychologischen Faktor für den Fahrer dar, da der Ladezustand der Batterie nicht so weit absinkt, bis die Batterie über den Verbrennungsmotor wieder aufgeladen wird.

Vorteilhafterweise wird der Verbrennungsmotor gestoppt, wenn beim Laden der Batterie durch den Verbrennungsmotor erfasst wird, dass der Ladezustand der Batterie oberhalb eines oberen Schwellenwerts liegt, wobei dieser obere Schwellenwert über dem unteren Schwellenwert liegt. Genauer gesagt wird der Verbrennungsmotor nicht gestoppt, wenn der Ladezustand oberhalb des oberen Schwellenwerts liegt, sondern es wird nur eine Freigabe zum Stoppen des Verbrennungsmotors erteilt. Wenn nicht andere Bedingungen, wie beispielsweise ein entsprechender Fahrerwunsch, gegen das Stoppen des Verbrennungsmotors sprechen, wird der Verbrennungsmotor gestoppt, wenn die Freigabe erteilt worden ist. Der untere Schwellenwert und/oder der obere Schwellenwert kann abhängig von der Häufigkeit, mit welcher der Ladezustand unter den unteren Schwellenwert fällt, geändert werden.

Indem beispielsweise der Abstand zwischen dem unteren Schwellenwert und dem oberen Schwellenwert vergrößert wird, wird unter sonst gleichen Voraussetzungen vorteilhafterweise die Häufigkeit reduziert, mit welcher der Ladezustand unter den unteren Schwellenwert fällt. Darüber hinaus wird dadurch auch der mittlere Ladezustand der Batterie erhöht, wenn der untere Schwellenwert zumindest nicht abgesenkt wird

Beispielsweise könnte der obere Schwellenwert um einen bestimmten Betrag (Offset), welcher im Folgenden Oberschwellenbetrag genannt wird, angehoben werden, wobei dieser Oberschwellenbetrag umso größer ist, je größer die Häufigkeit ist. Der obere Schwellenwert sollte maximal auf 50% des maximalen Ladezustands der Batterie gesetzt werden.

Darüber hinaus ist es möglich, dass der Unterschwellenbetrag und/oder der Oberschwellenbetrag nicht nur abhängig von der Häufigkeit sondern auch abhängig von einem Fahrzustand des Fahrzeugs bestimmt wird.

Dieser Fahrzustand des Fahrzeugs kann beispielsweise von der aktuellen Geschwindigkeit des Fahrzeugs oder von einer aktuellen Durchschnittsgeschwindigkeit des Fahrzeugs abhängen, so dass beispielsweise die Fahrzustände Stillstand, Kriechen und Fahren unterschieden werden können und abhängig von diesen Fahrzuständen der Unterschwellenbetrag und/oder der Oberschwellenbetrag bestimmt werden kann. Beispielsweise können der Unterschwellenbetrag und der Oberschwellenbetrag im Fahrzustand Stillstand derart gewählt werden, dass ein Abstand zwischen dem Oberschwellenbetrag und dem Unterschwellenbetrag größer ist als in dem Fahrzustand Fahren.

Gemäß einer bevorzugten erfindungsgemäßen Ausführungsform wird die Häufigkeit, mit welcher der Ladezustand unter den unteren Schwellenwert fällt, mit Hilfe eines Zählers bestimmt, welcher jeweils inkrementiert wird, wenn der Ladezustand unter diesen unteren Schwellenwert fällt. Dabei werden der untere Schwellenwert und/oder der obere Schwellenwert abhängig von einem Zählerwert dieses Zählers gesetzt, wobei der untere Schwellenwert und/oder der obere Schwellenwert umso höher gesetzt wird, umso größer der Zählerwert ist.

Der Zähler wird dabei insbesondere dann jeweils wieder dekrementiert, wenn der Ladezustand während eines vorbestimmten Zeitintervalls nicht unter den unteren Schwellenwert gefallen ist.

Damit wird das Hochzählen (Inkrementieren) des Zählers über ein Ereignis (Ladezustand fällt unter den unteren Schwellenwert) gesteuert, während das Herunterzählen (Dekrementieren) des Zählers zeitgesteuert erfolgt.

Erfindungsgemäß kann auch ein weiterer Zähler eingesetzt werden, welcher inkrementiert wird, wenn der Verbrennungsmotor gestartet wird, ohne dass gleichzeitig der Ladezustand unterhalb des unteren Schwellenwerts liegt. Anders ausgedrückt wird der weitere Zähler dann inkrementiert, wenn der Verbrennungsmotor aus anderen Gründen (und nicht speziell zum Laden der Batterie) gestartet wird (beispielsweise kann der Verbrennungsmotor aufgrund eines Fahrerwunsches oder aufgrund eines erhöhten Strombedarfs der Klimaanlage des Fahrzeugs gestartet werden). Dabei wird der Zählerwert des Zählers verringert oder der Zähler vollständig auf Null zurückgesetzt, wenn der Zählerwert des weiteren Zählers über einem vorbestimmten Schwellenwert liegt.

Mit Hilfe des weiteren Zählers wird beispielsweise gezählt, wie häufig von dem Fahrer das Fahrpedal vollständig durchgedrückt wird, wobei abhängig von der entsprechenden Häufigkeit bzw. dem Zählerstand des weiteren Zählers das Laden der Batterie wieder derart durchgeführt wird, wie es normalerweise (ohne die vorliegende Erfindung) der Fall ist.

Der Zählerwert des weiteren Zählers wird insbesondere dann verringert oder vollständig auf Null zurückgesetzt (reset), wenn eine oder mehrere der folgenden Bedingungen vorliegen:
- Der Zählerwert des Zählers wird inkrementiert.
- Der Zähler wird vollständig auf Null zurückgesetzt (reset).
- Das Fahrzeug fährt während einer ersten vorbestimmten Zeitdauer oder länger schneller als eine vorbestimmte Geschwindigkeit.
- Der Ladezustand der Batterie liegt über einem vorbestimmten Ladeschwellenwert, welcher selbst über dem oberen Schwellenwert liegt.
- Der Zählerwert des weiteren Zählers ist größer als ein vorbestimmter Zählerschwellenwert. Wenn der weitere Zähler einen bestimmten.Zählerwert erreicht hat, kann es sinnvoll sein, den weiteren Zähler auf Null zurückzusetzen, um die von dem weiteren Zähler zu bestimmende Häufigkeit quasi neu zu bestimmen.
- Ein Zündungswechsel liegt vor.
- Der weitere Zähler ändert eine zweite vorbestimmte Zeitdauer lang seinen Zählerwert nicht, wird also während dieser zweiten Zeitdauer insbesondere nicht inkrementiert. Wenn dies der Fall ist, ist es vorteilhaft, den weiteren Zähler zu dekrementieren.

Im Rahmen der vorliegenden Erfindung wird auch eine Vorrichtung zum Laden einer Batterie für ein Fahrzeug bereitgestellt. Dabei umfasst die Vorrichtung eine Steuerung und eine Erfassungsvorrichtung, welche ihrerseits insbesondere aus einem Zähler und einem Sensor zum Erfassen des Ladezustands der Batterie besteht. Das Fahrzeug umfasst neben der Batterie einen Verbrennungsmotor zum Laden der Batterie (und gegebenenfalls zum Antrieb des Fahrzeugs) und gegebenenfalls auch einen Elektromotor zum Antrieb des Fahrzeugs. Die Steuerung ist derart ausgestaltet, dass die Steuerung den Verbrennungsmotor zum Laden der Batterie startet, wenn der Ladezustand der Batterie unterhalb des unteren Schwellenwerts liegt. Die Erfassungsvorrichtung ist in der Lage, eine Häufigkeit zu bestimmen, mit welcher der Ladezustand unter den unteren Schwellenwert fällt. Abhängig von dieser Häufigkeit führt die Steuerung das Laden der Batterie durch den Verbrennungsmotor durch.

Die Vorteile der erfindungsgemäßen Vorrichtung entsprechen im Wesentlichen den Vorteilen des erfindungsgemäßen Verfahrens, welche vorab im Detail ausgeführt worden sind, so dass hier auf eine Wiederholung verzichtet wird.

Schließlich stellt die vorliegende Erfindung ein Fahrzeug bereit, welches eine Batterie, einen Verbrennungsmotor und eine erfindungsgemäße Vorrichtung umfasst.

Die vorliegende Erfindung weist folgende Vorteile auf:
- Durch die Reduktion der Häufigkeit der Betriebsartenwechsel tritt eine Art Beruhigung für das Fahrverhalten oder Fahrzeugverhalten auf.
- In Fahrphasen, in denen der Verbrennungsmotor meist nur zum Laden der Batterie gestartet wird, kann der durchschnittliche oder mittlere Ladezustand der Batterie angehoben werden, wodurch dem elektrischen System eine größere Ladung zur Verfügung steht, was für ein rein elektrisches Fahren oder für ein automatisches Ausschalten des Verrennungsmotors beim Halt des Fahrzeugs eingesetzt werden kann.
- Indem der untere und der obere Schwellenwert angehoben wird, finden die Nachladephasen nicht unter einem hohen Ladebedarf statt, so dass sich der Wirkungsgrad des Hybridsystems verbessert, was zu einem Kraftstoffverbrauchsvorteil führt.

Die vorliegende Erfindung ist für Fahrzeuge geeignet, welche sowohl einen Elektromotor als auch einen Verbrennungsmotor zum Antrieb des Fahrzeugs besitzen. Selbstverständlich ist die vorliegende Erfindung nicht auf diesen bevorzugten Anwendungsbereich beschränkt, da die vorliegende Erfindung auch bei Schiffen, Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.
- In Fig. 1: ist der Verlauf eines Ladezustands gemäß einem erfindungsgemäßen Verfahren dargestellt.
- Fig. 2: stellt schematisch ein erfindungsgemäßes Fahrzeug mit einer erfindungsgemäßen Vorrichtung dar.

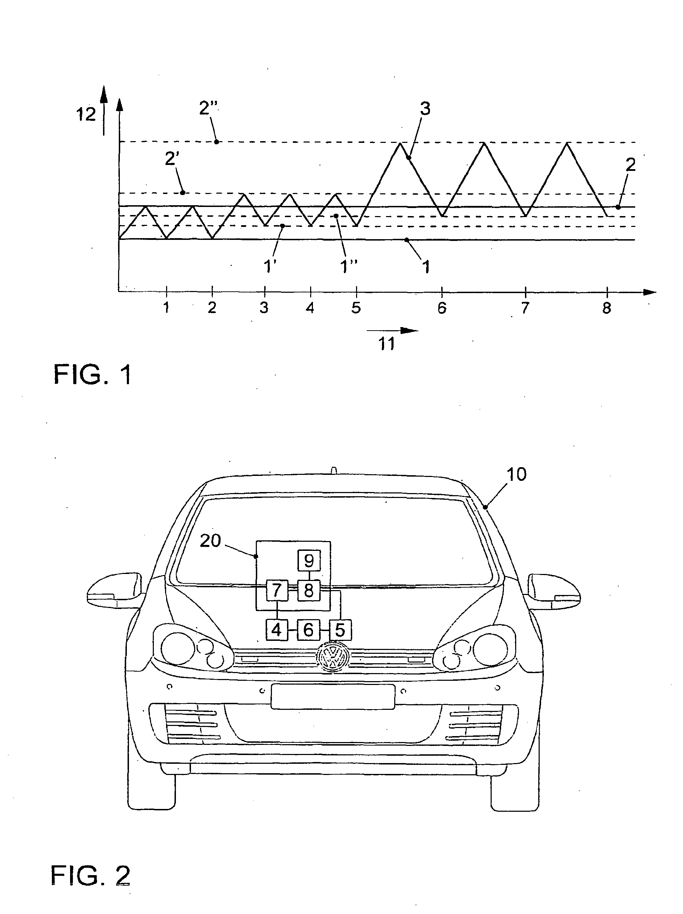

In Fig. 1 ist der Verlauf 3 des Ladezustands dargestellt. Dabei ist auf der y-Achse der Ladezustand 12 und auf der x-Achse der Zählerwert 11 desjenigen Zählers dargestellt, welcher jeweils inkrementiert wird, wenn der Ladezustand unter den unteren Schwellenwert fällt. Zu Beginn (Zählerwert = 0) gilt die untere durchgezogene Linie als unterer Ladeschwellenwert 1 und die obere durchgezogene Linie als oberer Ladeschwellenwert 2.

Wenn das entsprechende Fahrzeug beispielsweise im Stau steht, und der Verbrennungsmotor abgeschaltet ist, da er zum Antrieb des Fahrzeugs nicht benötigt wird, wird der Verbrennungsmotor dann eingeschaltet, sobald der Ladezustand unter den unteren Ladeschwellenwert 1 fällt. Wenn dies der Fall ist, wird der Zählerwert 11 inkrementiert. Wenn der Zählerwert 11 einen vorbestimmten Schwellenwert erreicht (in diesem Fall den Schwellenwert = 2), dann werden der untere Schwellenwert 1 und der obere Schwellenwert 2 entsprechend erhöht.

Dadurch läuft der Verbrennungsmotor zumindest so lange, bis der Ladezustand den neuen oberen Ladeschwellenwert 2' erreicht hat. Wenn anschließend (nach dem der Verbrennungsmotor gestoppt worden ist) der Ladezustand den neuen unteren Ladeschwellenwert 1' erreicht, wird der Verbrennungsmotor erneut gestartet. Wenn der Zählerwert 11 einen weiteren vorbestimmten Schwellenwert erreicht (in diesem Fall den Schwellenwert = 5), werden wiederum der untere Schwellenwert und der obere Schwellenwert angehoben. In diesem Fall wird der obere Schwellenwert um einen höheren Betrag angehoben als der untere Schwellenwert, so dass sich der Abstand zwischen dem oberen Schwellenwert 2" und dem unteren Schwellenwert 1" vergrößert.

Dadurch läuft der Verbrennungsmotor wiederum zumindest so lange, bis der Ladezustand der Batterie den neuen oberen Ladeschwellenwert 2" erreicht.. Erst wenn anschließend (nachdem der Verbrennungsmotor gestoppt worden ist) der Ladezustand unter den neuen unteren Ladeschwellenwert 1" fällt, wird der Verbrennungsmotor zum Laden der Batterie neu gestartet. Da sich der Abstand zwischen dem oberen Schwellenwert 2" und dem unteren Schwellenwert vergrößert hat, nimmt vorteilhafterweise die Häufigkeit pro Zeiteinheit ab, mit welcher der Verbrennungsmotor zum Laden der Batterie gestartet wird.

In Fig. 2 ist schematisch ein erfindungsgemäßes Fahrzeug 10 dargestellt, welches einen Verbrennungsmotor 5 und einen Elektromotor 6 jeweils zum Antrieb des Fahrzeugs umfasst. Daneben umfasst das Fahrzeug 10 eine Batterie 4 und eine erfindungsgemäße Vorrichtung 20 zum Laden der Batterie 4. Die erfindungsgemäße Vorrichtung 20 umfasst ihrerseits neben einer Steuerung 8 einen Sensor 7, mit welchem der Ladezustand der Batterie 4 erfasst werden kann, und einen Zähler 9, mit welchem die Häufigkeit gezählt wird, mit welcher der Ladezustand unter den unteren Schwellenwert fällt. Die Steuerung 8 ist derart ausgestaltet, dass sie den unteren Schwellenwert und/oder den oberen Schwellenwert abhängig von dem Zählerstand des Zählers 9 ändert.

## Patentansprüche

1. Verfahren zum Laden einer Batterie (4) für ein Fahrzeug (10),
wobei das Fahrzeug (10) einen Verbrennungsmotor (5) zum Laden der Batterie (4) umfasst,
wobei ein Ladezustand (12) der Batterie (4) bestimmt wird,
wobei der Verbrennungsmotor (5) zum Laden der Batterie (4) gestartet wird, wenn der Ladezustand (12) unterhalb eines unteren Schwellenwerts (1; 1'; 1") liegt,
**dadurch gekennzeichnet,**
dass eine Häufigkeit pro Zeiteinheit bestimmt wird, mit welcher der Ladezustand (12) unter den unteren Schwellenwert (1; 1'; 1") fällt, und
dass das Laden der Batterie (4) durch den Verbrennungsmotor (5) in Abhängigkeit von der Häufigkeit durchgeführt wird.

2. Verfahren nach Anspruch 1, **dadurch gekennzeichnet,** dass, wenn die Häufigkeit oberhalb eines Häufigkeitsschwellenwerts liegt, das Laden der Batterie (4) durch den Verbrennungsmotor (5) derart durchgeführt wird, dass die Häufigkeit sinkt.

3. Verfahren nach Anspruch 1 oder 2,
**dadurch gekennzeichnet,**
dass, wenn ein bestimmter Fahrzustand des Fahrzeugs (10) erfasst wird, die Häufigkeit auf Null zurückgesetzt und die Häufigkeit anschließend neu bestimmt wird.

4. Verfahren nach Anspruch 3,
**dadurch gekennzeichnet,**
dass der bestimmte Fahrzustand zumindest einen von folgenden Zuständen umfasst:
• das Fahrzeug (10) fährt länger als eine vorbestimmte Zeitdauer schneller als eine vorbestimmte Geschwindigkeit,
• der Ladezustand (12) übersteigt einen vorbestimmten Ladeschwellenwert, und
• ein Zündungswechsel tritt auf.

5. Verfahren nach einem der vorhergehenden Ansprüche, **dadurch gekennzeichnet,** dass der untere Schwellenwert (1; 1'; 1 ") um einen von der Häufigkeit abhängigen Unterschwellenbetrag geändert wird.

6. Verfahren nach einem der vorhergehenden Ansprüche,
**dadurch gekennzeichnet,**
dass bei dem Laden der Batterie (4) durch den Verbrennungsmotor (5) der Verbrennungsmotor (5) gestoppt wird, wenn der Ladezustand (12) der Batterie (4) oberhalb eines oberen Schwellenwerts (2; 2'; 2") liegt, welcher größer als der untere Schwellenwert (1; 1'; 1") ist, und
dass abhängig von der Häufigkeit der untere Schwellenwert (1; 1'; 1") und/oder der obere Schwellenwert (2; 2'; 2") geändert wird.

7. Verfahren nach Anspruch 6, **dadurch gekennzeichnet,** dass der obere Schwellenwert (2; 2'; 2") um einen Oberschwellenbetrag angehoben wird, welcher umso größer ist, je größer die Häufigkeit ist.

8. Verfahren nach einem der Ansprüche 5-7, **dadurch gekennzeichnet,** dass der Unterschwellenbetrag und/oder der Oberschwellenbetrag zusätzlich abhängig von einem Fahrzustand des Fahrzeugs bestimmt wird.

9. Verfahren nach einem der Ansprüche 6-8,
**dadurch gekennzeichnet,**
dass die Häufigkeit mittels eines Zählers (9) bestimmt wird, welcher inkrementiert wird, wenn der Ladezustand (12) unter den unteren Schwellenwert (1; 1'; 1") fällt, und
dass der untere Schwellenwert (1; 1'; 1") und/oder der obere Schwellenwert (2; 2'; 2") abhängig von einem Zählerwert (11) des Zählers (9) gesetzt wird, wobei der untere Schwellenwert (1; 1'; 1") und/oder der obere Schwellenwert (2; 2'; 2") umso höher gesetzt wird, je größer der Zählerwert (11) ist.

10. Verfahren nach Anspruch 9, **dadurch gekennzeichnet,** dass der Zähler (9) dekrementiert wird, wenn der Ladezustand (12) innerhalb einer vorbestimmten Zeitspanne nicht unter den unteren Schwellenwert (1; 1'; 1") fällt.

11. Verfahren nach Anspruch 9 oder 10,
**dadurch gekennzeichnet,**
dass ein weiterer Zähler inkrementiert wird, wenn der Verbrennungsmotor (5) gestartet wird, ohne dass der Ladezustand (12) unterhalb des unteren Schwellenwerts (1; 1'; 1") liegt, und
dass der Zählerwert (11) des Zählers (9) verringert wird, wenn ein Zählerwert des weiteren Zählers oberhalb eines vorbestimmten Schwellenwerts liegt.

12. Verfahren nach Anspruch 11, **dadurch gekennzeichnet,** dass der Zählerwert des weiteren Zählers verringert wird, wenn zumindest eine von folgenden Bedingungen erfüllt ist:
• der Zählerwert (11) des Zählers (9) wird inkrementiert,
• der Zählerwert (11) des Zählers (9) wird auf Null zurückgesetzt,
• das Fahrzeug (10) fährt während zumindest einer ersten vorbestimmten Zeitdauer schneller als eine vorbestimmte Geschwindigkeit,
• der Ladezustand (12) übersteigt einen vorbestimmten Ladeschwellenwert, welcher oberhalb des oberen Schwellenwerts (2; 2'; 2") liegt,
• der Zählerwert des weiteren Zählers ist größer als ein vorbestimmter Zählerschwellenwert,
• ein Zündungswechsel tritt auf, und
• der weitere Zähler ändert während einer zweiten vorbestimmten Zeitdauer seinen Zählerwert nicht.

13. Vorrichtung zum Laden einer Batterie (4) für ein Fahrzeug (10),
wobei die Vorrichtung (20) eine Steuerung (8) umfasst,
wobei das Fahrzeug (10) einen Verbrennungsmotor (5) zum Laden der Batterie (4) umfasst,
wobei die Steuerung (8) ausgestaltet ist, den Verbrennungsmotor (5) zum Laden der Batterie (4) zu starten, wenn ein Ladezustand (12) der Batterie (4) unterhalb eines unteren Schwellenwerts (1; 1'; 1") liegt,
**gekennzeichnet durch**
eine Erfassungsvorrichtung (7, 9), welche ausgestaltet ist, eine Häufigkeit zu bestimmen, mit welcher der Ladezustand (12) unter den unteren Schwellenwert (1; 1'; 1") fällt, und dass die Steuerung (8) ausgestaltet ist, das Laden der Batterie (4) durch den Verbrennungsmotor (5) in Abhängigkeit von der Häufigkeit durchzuführen.

14. Vorrichtung nach Anspruch 13, **dadurch gekennzeichnet,** dass die Vorrichtung (20) zur Durchführung des Verfahrens nach einem der Ansprüche 1-12 ausgestaltet ist.

15. Fahrzeug mit einer Batterie (4) und einer Vorrichtung (20) nach Anspruch 13 oder 14.

## Claims

1. Method for charging a battery (4) for a vehicle (10),
wherein the vehicle (10) comprises an internal combustion engine (5) for charging the battery (4),
wherein a state of charge (12) of the battery (4) is determined,
wherein the internal combustion engine (5) is started in order to charge the battery (4) when the state of charge (12) is below a lower threshold value (1; 1'; 1''),
**characterized**
in that a frequency per time unit with which the state of charge (12) drops below the lower threshold value (1; 1'; 1'') is determined, and
in that the charging of the battery (4) is carried out by means of the internal combustion engine (5) as a function of the frequency.

2. Method according to Claim 1, **characterized** in that if the frequency is above a frequency threshold value, the charging of the battery (4) by means of the internal combustion engine (5) is carried out in such a way that the frequency drops.

3. Method according to Claim 1 or 2,
**characterized**
in that if a specific driving state of the vehicle (10) is detected, the frequency is reset to zero, and the frequency is then newly determined.

4. Method according to Claim 3,
**characterized**
in that the determined driving state comprises at least one of the following states :
• the vehicle (10) travels more quickly than a predetermined speed for longer than a predetermined time period,
• the state of charge (12) exceeds a predetermined threshold charge value, and
• an ignition changeover occurs.

5. Method according to one of the preceding claims,
**characterized** in that the lower threshold value (1; 1'; 1'') is changed by a lower threshold absolute value which is dependent on the frequency.

6. Method according to one of the preceding claims,
**characterized**
in that during the: charging of the battery (4) by the internal combustion engine (5) the internal combustion engine (5) is stopped if the state of charge (12) of the battery (4) is above an upper threshold value (2; 2'; 2'') which is higher than the lower threshold value (1; 1'; 1''),
and
in that the lower threshold value (1; 1', 1'') and/or the upper threshold value (2; 2' ; 2'') are/is changed as a function of the frequency.

7. Method according to Claim 6, **characterized** in that the upper threshold value (2; 2'; 2'') is raised by an upper threshold absolute value which is higher the higher the frequency.

8. Method according to one of Claims 5-7,
**characterized** in that the lower threshold absolute value and/or the upper threshold absolute value are/is additionally determined as a function of a driving state of the vehicle.

9. Method according to one of Claims 6-8,
**characterized**
in that the frequency is determined by means of a counter (9) which is incremented if the state of charge (12) drops below the lower threshold value (1; 1'; 1''), and
in that the lower threshold value (1; 1'; 1'') and/or the upper threshold value (2; 2'; 2'') is set as a function of a counter value (11) of the counter (9), wherein the lower threshold value (1; 1'; 1'') and/or the upper threshold value (2; 2'; 2'') are/is set higher the higher the counter value (11).

10. Method according to Claim 9, **characterized** in that the counter (9) is decremented if the state of charge (12) does not drop below the lower threshold value (1; 1'; 1'') within a predetermined time period.

11. Method according to Claim 9 or 10,
**characterized**
in that a further counter is incremented if the internal combustion engine (5) is started without the state of charge (12) being below the lower threshold value (1; 1', 1''), and
in that the counter value (11) of the counter (9) is reduced if a counter value of the further counter is above a predetermined threshold value.

12. Method according to Claim 11, **characterized** in that the counter value of the further counter is reduced if at least one of the following conditions is met;
• the counter value (11) of the counter (9) is incremented,
• the counter value (11) of the counter (9) is reset to zero,
• the vehicle (10) travels more quickly than a predetermined speed during at least a first predetermined time period,
• the state of charge (12) exceeds a predetermined charge threshold value which is above the upper threshold value (2; 2'; 2''),
• the counter value of the further counter is higher than a predetermined counter threshold value,
• an ignition changeover occurs, and
• the further counter does not change its counter value during a second predetermined time period.

13. Apparatus for charging a battery (4) for a vehicle (10),
wherein the apparatus (20) comprises a controller (8),
wherein the vehicle (10) comprises an internal combustion engine (5) for charging the battery (4),
wherein the controller (8) is configured to start the internal combustion engine (5) to charge the battery (4) if a state of charge (12) of the battery (4) is below a lower threshold value (1; 1'; 1''),
**characterized by**
a detection apparatus (7, 9) which is configured to determine a frequency with which the state of charge (12) drops below the lower threshold value (1; 1'; 1''), and
in that the controller (8) is configured to carry out the charging of the battery (4) by means of the internal combustion engine (5) as a function of the frequency.

14. Apparatus according to Claim 13, **characterized** in that the apparatus (20) is configured to carry out the method according to one of Claims 1-12.

15. vehicle having a battery (4) and an apparatus (20) according to Claim 13 or 14.

## Revendications

1. Procédé de charge d'une batterie (4) pour un véhicule (10) ;
le véhicule (10) comprenant un moteur à combustion interne (5) pour charger la batterie (4) ;
un état de charge (12) de la batterie (4) étant déterminé ;
le moteur à combustion interne (5) étant démarré pour charger la batterie (4) lorsque l'état de charge (12) se situe en dessous d'une valeur seuil inférieure (1 ; 1' ; 1'') ;
**caractérisé en ce que** :
une fréquence est déterminée par unité de temps à l'acide de laquelle l'état de charge (12) chute en dessous de la valeur seuil inférieure (1 ; 1' ; 1'') ; et
la charge de la batterie (4) est réalisée en fonction de la fréquence par le biais du moteur à combustion interne (5).

2. Procédé selon la revendication 1, **caractérisé en ce que** lorsque la fréquence se situe au-dessus d'une valeur seuil de fréquence, la charge de la batterie (4) par le biais du moteur à combustion interne (5) est réalisée de telle sorte que la fréquence baisse.

3. Procédé selon la revendication 1 ou 2, **caractérisé en ce que** lorsqu'un état de conduite déterminé du véhicule (10) est détecté, la fréquence est ramenée à zéro et la fréquence est ensuite de nouveau déterminée.

4. Procédé selon la revendication 3, **caractérisé en ce que** :
l'état de conduite déterminé comprend au moins un des états suivants :
- le véhicule (10) roule plus longtemps qu'une durée prédéfinie à une vitesse plus rapide qu'une vitesse prédéfinie ;
- l'état de charge (12) dépasse une valeur seuil de charge prédéfinie ; et
- un changement d'allumage se produit.

5. Procédé selon l'une quelconque des revendications précédentes, **caractérisé en ce que** la valeur seuil inférieure (1 ; 1' ; 1'') est modifiée d'un montant de seuil inférieur dépendant de la fréquence.

6. Procédé selon l'une quelconque des revendications précédentes, **caractérisé en ce que** :
en cas de charge de la batterie (4) par le biais du moteur à combustion interne (5), le moteur à combustion interne (5) est arrêté lorsque l'état de charge (12) de la batterie (4) se situe au-dessus d'une valeur seuil supérieure (2 ; 2' ; 2'') supérieure à la valeur seuil inférieure (1 ; 1' ; 1'') ; et
la valeur seuil inférieure (1 ; 1' ; 1'') et/ou la valeur seuil supérieure (2 ; 2' ; 2'') est modifiée en fonction de la fréquence.

7. Procédé selon la revendication 6, **caractérisé en ce que** la valeur seuil supérieure (2 ; 2' ; 2'') est relevée d'un montant de seuil supérieur d'autant plus élevé que la fréquence est élevée.

8. Procédé selon l'une quelconque des revendications 5 à 7, **caractérisé en ce que** le montant de seuil inférieur et/ou le montant de seuil supérieur sont en outre déterminés en fonction d'un état de conduite du véhicule.

9. Procédé selon l'une quelconque des revendications 6 à 8, **caractérisé en ce que** :
la fréquence est déterminée à l'aide d'un compteur (9) incrémenté lorsque l'état de charge (12) chute en dessous de la valeur seuil inférieure (1 ; 1' ; 1'') ; et
la valeur seuil inférieure (1 ; 1' ; 1'') et/ou la valeur seuil supérieure (2 ; 2' ; 2'') est définie en fonction d'une valeur de compteur (11) du compteur (9),
la valeur seuil inférieure (1 ; 1' ; 1'') et/ou la valeur seuil supérieure (2 ; 2' ; 2'') étant d'autant plus élevée que la valeur de compteur (11) est élevée.

10. Procédé selon la revendication 9, **caractérisé en ce que** le compteur (9) est décrémenté lorsque l'état de charge (12) ne chute pas à l'intérieur d'un intervalle de temps prédéfini en dessous de la valeur seuil intérieure (1 ; 1' ; 1'').

11. Procédé selon la revendication 9 ou 10, **caractérisé en ce que** :
un compteur supplémentaire est incrémenté lorsque le moteur à combustion interne (5) est démarré sans que l'état de charge (12) se situe en dessous de la valeur seuil inférieure (1 ; 1' ; 1'') ; et
la valeur de compteur (11) du compteur (9) est réduite lorsqu'une valeur de compteur du compteur supplémentaire se situe au-dessus d'une valeur seuil prédéfinie.

12. Procédé selon la revendication 11, **caractérisé en ce que** la valeur de compteur du compteur supplémentaire est réduite lorsqu'au moins une des conditions suivantes est remplie :
- la valeur de compteur (11) du compteur (9) est incrémentée ;
- la valeur de compteur (11) du compteur (9) est ramenée à zéro ;
- le véhicule (10) roule à une vitesse plus rapide qu'une vitesse prédéfinie pendant au moins une première durée prédéfinie ;
- l'état de charge (12) dépasse une valeur seuil de charge prédéfinie supérieure à la valeur seuil supérieure (2 ; 2' ; 2'') ;
- la valeur de compteur du compteur supplémentaire est supérieure à une valeur seuil de compteur prédéfinie ;
- un changement d'allumage se produit ; et
- le compteur supplémentaire ne change pas sa valeur de compteur pendant une deuxième durée prédéfinie.

13. Dispositif de charge d'une batterie (4) pour un véhicule (10) ;
le dispositif (20) comprenant un élément de commande (8) ;
le véhicule (10) comprenant un moteur à combustion interne (5) pour charger la batterie (4) ;
l'élément de commande (8) étant configuré pour démarrer le moteur à combustion interne (5) pour la charge de la batterie (4) lorsqu'un état de charge (12) de la batterie (4) se situe en dessous d'une valeur seuil inférieure (1 ; 1' ; 1'') ;
**caractérisé par** :
un dispositif de détection (7, 9) configuré pour déterminer une fréquence à laquelle l'état de charge (12) chute en dessous de la valeur seuil inférieure (1 ; 1' ; 1'') ; et
l'élément de commande (8) étant configuré pour réaliser la charge de la batterie (4) par le biais du moteur à combustion interne (5) en fonction de la fréquence.

14. Dispositif selon la revendication 13, **caractérisé en ce que** le dispositif (20) de mise en oeuvre du procédé est réalisé selon l'une quelconque des revendications 1 à 12.

15. Véhicule équipé d'une batterie (4) et d'un dispositif (20) selon la revendication 13 ou 14.
